# EUROPEAN PATENT SPECIFICATION

(11) **EP 0 432 318 B1**
(45) Date of publication and mention of the grant of the patent: **24.08.1994**
(21) Application number: 89203199.8
(22) Date of filing: 15.12.1989
(51) Int. Cl.: A01D 41/06, A01D 41/14

(54) **Universal combine harvester crop gathering attachment**
Universelles Ernte-Zusatzgerät für Mähdrescher
Dispositif auxiliaire de récolte universelle pour moissonneuse-batteuse

(43) Date of publication of application: 19.06.1991
(73) Proprietor: NEW HOLLAND BELGIUM N.V., B-8210 Zedelgem (BE)
(72) Inventor: Naaktgeboren, Adrianus, B-8211 Zedelgem Veldegem (BE); Clarisse, Jasper, B-8000 Brugge (BE)
(74) Representative: Vandenbroucke, Alberic

(56) References cited:
- EP-A- 0 212 185
- BE-A- 572 771
- DE-A- 2 418 995
- DE-A- 3 708 550
- GB-A- 2 219 482
- US-A- 2 328 713
- US-A- 2 636 331
- US-A- 3 399 517
- US-A- 3 783 593
- US-A- 4 715 174

## Description

The present invention relates to crop gathering attachments for combine harvesters.

For several decades, combine harvesters have been equiped with so-called grain headers for harvesting all grain crops such as wheat, barley, oats, rye, rice, soyabeans, oil seed rape, peas and other similar crops. These grain headers conventionally include a header main body with an auger structure with retractable fingers mounted therein. Mower means, usually in the form of a reciprocating sickle bar, are provided generally at the lower and forward transverse edge of the header main body. A reel with postion controlled reel tines is mounted generally above the mower means.

In use, the mower means, the reel and the auger structure cooperate to gather crop material from the field and to convey it toward the combine harvester base unit for being threshed, separated and cleaned therein. The mower means sever standing crop, including both wanted and unwanted parts, from the stubble and the reel transports this severed crop material to the header auger which transversely consolidates this material prior to transferring it to an elevator leading to the combine harvester base unit.

These grain headers perform generally satisfactorily in most crops and crop conditions. Nevertheless, as is illustrated in BE-A-572.771, some grain headers also have been equiped with a draper conveyor extending beween the mower means and the header auger (so-called draper headers) to improve operational efficiency in tough crops and crop conditions on the one hand and to reduce losses in loss sensitive crops on the other hand. One example of a tough crop condition is e.g. a lodged rye crop. On the other hand, peas, beans, soyabeans and oil seed rape are examples of loss sensitive crops. While so-called draper headers better can cope with said tough as well as with said loss sensitive crops and crop conditions, these draper headers obviously also can handle the aforementioned "normal" crops and crop conditions in a fully satisfactory manner.

Combine harvesters equiped with these conventional types of grain or draper headers take in major quantities of unwanted crop material in addition to the wanted crop material and this has been experienced as a major capacity limiting factor as indeed the capacity of a combine harvester greatly depends on the throughput of M.O.G. (material other than grain).

More recently, so-called stripper headers have appeared on the market which, when installed on combine harvesters, permit a substantial capacity increase of these combine harvesters in most crops and crop conditions. This capacity increase may be in the range of 15-100% depending on the crops and crop conditions.

This is obtained by reducing the M.O.G. or the amount of unwanted crop material which is passed through the combine harvester base unit. To this end, a stripper apparatus in the header is arranged to detach the wanted parts of the crop from the remainder of that crop by a stripping action. These wanted parts are processed in the combine harvester in the conventional way while the stripped crop stems and other unwanted parts are left standing in the field.

Stripper headers of this type are disclosed in a.o. EP-A-0.241.276; EP-A-0.316.969; GB-A-2.207.847; WO-A-88/05626 and WO-A-88/04885.

However, these stripper headers still are far from universal in as much as they cannot handle certain tough and/or loss sensitive crops and crop conditions in a fully satisfactory manner. These crops and crop conditions, at present, still require a conventional grain header, which advantageously should be a so-called draper header. As a consequence any farmer who elects to buy a stripper header necessarily also must buy a back-up header of the conventional type for handling these tough and/or loss sensitive crops and crop conditions.

This is very cost-inefficient and therefore also a major drawback for present day stripper headers. Furthermore, changing from one crop to another also often requires replacing the stripper header by the conventional header and vice versa. This is both time consuming and impractical.

It is therefore the objective of the present invention to provide a universal header for a combine harvester which, at wish, may be set, on the one hand, to strip harvest crops whenever possible or desirable so as to substantially improve the harvesting capacity or, on the other hand, to harvest crop material in a conventional manner i.e. to harvest the wanted crop material together with substantial portions of the unwanted material, whenever strip harvesting is neither possible nor desirable.

According to the present invention a header for harvesting combinable crops is provided which comprises :
- a header main body;
- a header auger;
- stripper means at a location forwardly of the header auger when seen in the direction of forward operative travel of the header and operable, in use, to strip wanted crop material from standing crop stems; and
- mower means;
   said header being characterized in that it further also comprises :
- draper means between the stripper means and the mower means on the one hand and the header auger on the other hand; the mower means being operable, in use, to sever standing crop material comprising crop stems with wanted crop material thereon from the stubble;
- means associated with the mower means for making these mower means, at wish, operable, respectively inoperable to perform said severing function; and
- means associated with the stripper means for making these stripper means, at wish, operable, respectively inoperable to perform said stripping function;
   the arrangement being such that the header is adjustable, at wish, in either one of the following operating conditions wherein :
   a) either the mower means are made inoperable to perform said severing function and the stripper means are made operable to perform said stripping function and deliver wanted crop material to the draper means for further transport thereby to the header auger, or
   b) the stripper means are made inoperable to perform said stripping function and the mower means are made operable to perform said severing function and permit delivery of severed crop material to the draper means for further transport thereby to the header auger.

Crop gathering attachments constructed in accordance with the present invention and applied to a combine harvester will now be described in greater detail, by way of example, with reference to the accompanying drawings, in which :
Figure 1 is a schematic side view of the combine harvester fitted with a first and preferred embodiment of a crop gathering attachment according to the present invention,
Figure 2 is a schematic side view on a larger scale of the crop gathering attachment shown in Figure 1 and set for strip harvesting crops,
Figure 3 is a view similar to Figure 2 but illustrating the crop gathering attachment in a different typical setting; this setting being adapted to harvest crops for which strip harvesting is not suited,
Figure 4 is a view similar to Figures 2 and 3 but illustrating another embodiment of the present invention and which again is set for harvesting crops for which strip harvesting is not suited. The strip harvesting setting is illustrated therein in dotted lines, and
Figure 5 again is a view similar to Figures 2 and 3 but illustrating still another embodiment of the invention. The cutterbar of this embodiment is shown in three characteristic positions.

The terms "forward", "rearward", "left", "right" etc used in connection with the combine harvester and/or components thereof such as e.g. the header, are determined with reference to the direction of forward operative travel of the machine but should not be considered as limiting. Also, terms such as "wanted" and "unwanted" crop material, respectively "crop ears" or "grain heads" and "crop stems" are used principally throughout this specification for convenience and it should be understood that these terms equally are not intended to be limiting.

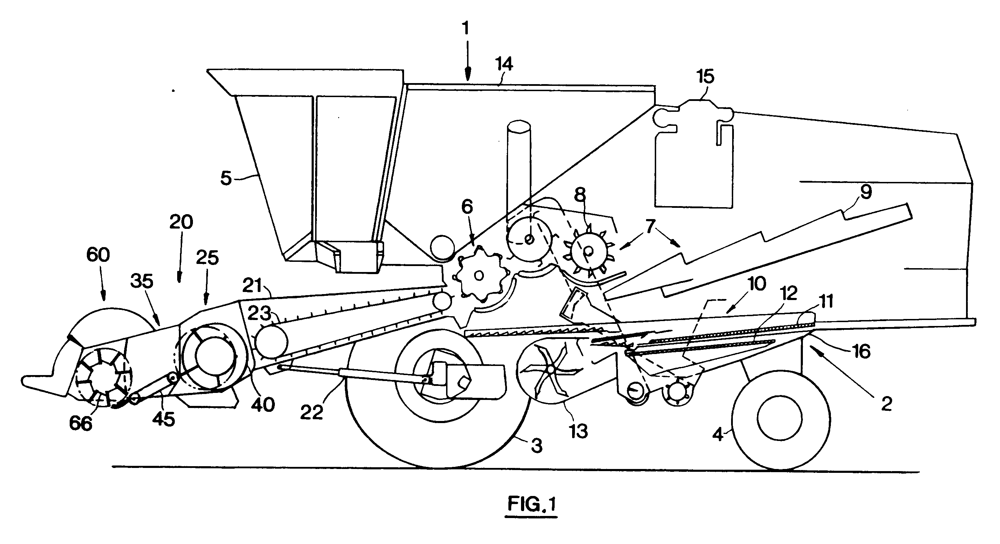

Referring to Figure 1, a combine harvester 1 is shown therein which is generally of the conventional type in that the main body 2 thereof is fitted with a pair of front, driveable wheels 3, a pair of rear, steerable wheels 4 and an operator's cab 5. The main body 2 further comprises threshing means 6, separating means 7 including rotary separating means 8 and straw walkers 9, cleaning means 10 including cleaning sieves 11, 12 and cleaning fan 13, a grain tank 14 and a power source 15. As is also conventional, the main body 2 of the combine harvester 1 is fitted with a header 20 but in this instance, this header constitutes a crop gathering attachment in accordance with the present invention.

Still referring to Figure 1, the header 20 is connected to the forward end of an elevator housing 21 which itself is pivotally attached at its other end to the combine harvester main body 2 thus enabling adjustment of the header 20 and elevator housing 21 relative thereto. To this end, hydraulic actuators 22 are provided, in the normal manner, on each side of the machine between the main body 2 of the combine harvester 1 and the forward end of the elevator housing 21. The elevator housing 21 comprises a chain conveyor 23 which, in use, conveys crop material from the header 20 to the threshing means 6.

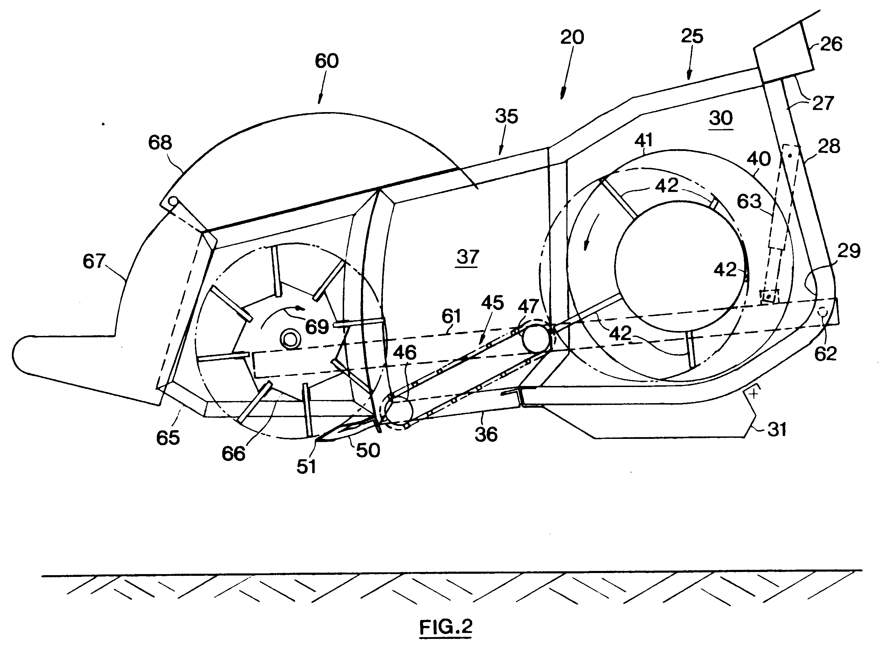

Turning now to Figures 2 to 5, the header 20 comprises a main body 25 which extends generally transversely when considered with respect to the intended direction of operative travel. This main body 25 comprises a transverse main beam 26 of the frame 27 and a plurality of transversely spaced apart, shaped frame members 28; said main beam 26 and frame members 28 together carrying a transverse, trough shaped header wall 29. At the transversely opposite ends, end walls 30 are provided which rotatably support a header auger 40 therebetween at a location within the trough shape. The header wall 29 comprises a central, rearwardly facing outlet in its generally upright portion and ground engageable skids 31 are attached to the underside of the header main frame 27.

The header auger 40 comprises, as is conventional, outer, oppositely directed auger flights 41 and a central section with retractable fingers 42. The header auger 40, in use, transversely consolidates crop material towards the central section which, in turn, discharges this consolidated crop material rearwardly through the header outlet and into the elevator housing inlet.

The header and header auger parts described so far are parts of a typical grain header. A draper apparatus 35 which equally belongs to the state of the art, is coupled to the forward end of the header main body 25 described so far and comprises a bottom wall 36 attached to the forward edge of the header wall 29 and opposite side walls 37 attached to the forward edges of the corresponding header end walls or side walls 30. The bottom wall 36 and the side walls 37 together form a subframe which operatively carries the draper conveyor 45 and which preferably is connectable to the header main body 25 as a single unit.

The draper conveyor 45 is movably supported on forward and rearward transverse guide rolls 46, 47 which, in turn, are rotatably supported between the side walls 37 and on the bottom wall 36 as is conventional. Conventional drive means (not shown) are provided to drive the draper conveyor 45 so that the upper side thereof moves in the direction towards the header auger 40. The draper conveyor 45 is inclined upwardly as seen in the rearward direction and has its rear discharge end proximate to the header auger 40 at a level above the lower end thereof. The draper conveyor 45 may be in any conventional form although a canvas type conveyor with transverse slats attached thereto, is preferred.

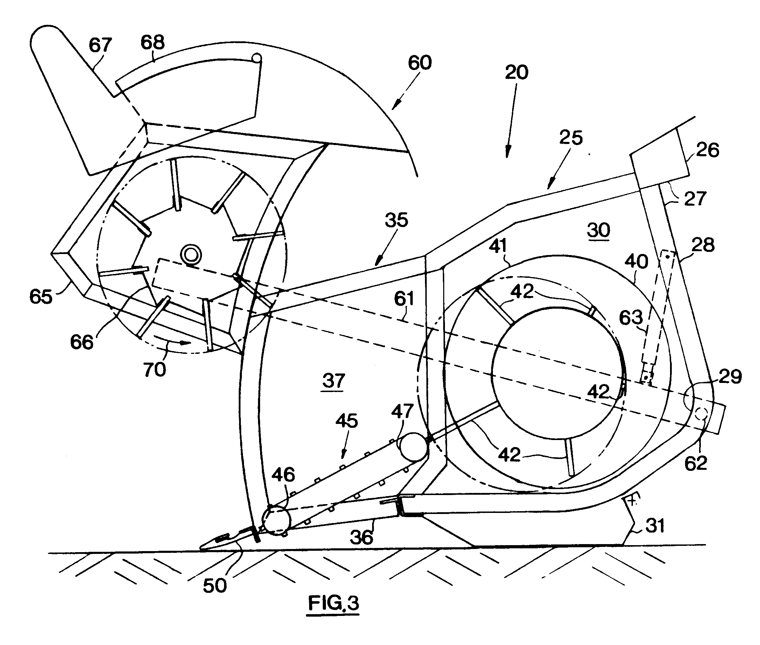

With reference to Figures 2 and 3, a conventional transverse cutterbar 50 preferably is attached to the forward edge of the bottom wall 36 of the draper apparatus 35 and conventional drive means (not shown) are provided for driving the sickle bar of this cutterbar 50. The cutterbar 50 takes the position of the pick-up in a so-called draper header which is generally known in the art and which is adapted to pick-up previously cut and windrowed crop material from the field. Draper headers equiped with a cutterbar equally belong to the state-of-the-art.

The preferred embodiment illustrated in Figures 2 and 3 further also comprises a stripper apparatus 60 which adjustably is mounted on the header frame 27 via the intermediary of a pair of transversely spaced apart pivot arms 61 having their pivots 62 on the outer ones of the header frame members 28. Hydraulic cylinders 63 extend between these arms 61 and the outer frame members 28 for enabling height adjustment of the stripper attachment 60 relative to the draper conveyor 45 and the cutterbar 50.

The stripper apparatus 60 comprises opposite sidewalls 65 which, in the lower position of the apparatus 60, match with the draper apparatus side walls 37. The stripper apparatus 60 further also comprises a stripper rotor 66 and associated cover shields 67, 68, the details of which will not be described here in as much as these parts again are conventional and may be in the form as disclosed e.g. in EP-A-0.241.276; EP-A-0.316.969; GB-A-2.207.847; WO-A-88/05626 and WO-A-88/04885.

Drive means (not schown) are provided, which preferably are of the hydrostatic type, for driving the stripper rotor 66, at wish, either in the clockwise or the anti-clockwise direction 69, respectively 70 as viewed in Figures 2 and 3. Hydrostatic type drive means are preferred as they enable easy adjustment of the drive speed on the one hand and are easy to combine with the height adjustability of the stripper apparatus 60 on the other hand.

For harvesting crops which are suited to be "stripped" (i.e. the majority of crops and crop conditions), the stripper apparatus 60 is adjusted into its lowermost position with respect to the draper conveyor 45 and the cutterbar 50. In addition, the cutterbar 50 either is shielded with a cover plate 51 and the drive thereto is disengaged or the cutterbar 50 is removed. The entire header 20 is lifted to a raised position above the ground level which is adapted to the type and condition of the crop to be harvested. The cover shield 67 also is adjusted to a position adapted to this type and condition of the crop to be harvested. The stripper rotor 66 is rotated at a relatively high speed, preferably in the range of 600-750 rpm and in the clockwise direction 69 as viewed in Figure 2 and finally, the combine harvester is driven at a relatively high speed across the field of crop material to be harvested. This speed may be in the range of 5-10 km/hour.

With this setting, the stripper apparatus is operable to strip wanted crop material, i.e. grain kernals and grain heads, from the standing crop stems without the latter being cut. Wanted crop material is conveyed overtop by the stripper rotor 66 through the passage between this rotor 66 and the cover shields 67, 68 and is discharged thereby onto the draper conveyor 45 which, in turn, conveys this material to the header auger 40 for further transport thereby towards the base unit 2 where it is threshed, separated and cleaned in the conventional manner. The unwanted crop stems remain standing in the field as is known with conventional stripper headers.

With this setting of the header according to the present invention, a very substantial increase in harvesting capacity can be obtained when compared with the average capacity of a conventional combine harvester. This increase may be in the range of 15-100%. A major reason therefore is that, with a stripper header, unwanted straw material remains uncut, i.e. remains on the field and, as a consequence, does not enter the threshing and separating means 6 and 7 of the base unit 2 whereby these components proportionally have to handle substantially less unwanted material, i.e. straw material.

Subsequent to this harvesting operation, the unwanted crop stems still standing in the field can be disposed of in one or another convenient manner. This may be accomplished by simply ploughing the unwanted crop material under. Alternatively it may involve either an additional burning, chopping or mowing operation. Also a chopper or additional mower may be provided on the combine harvester at a location rearwarly of the stripper rotor 66 to enable both the afore described harvesting operation of the wanted crop material and the disposal of the unwanted crop material in a single pass across the crop field. What is left of the unwanted crop material after this burning, chopping or cutting operation may be worked into the soil by ploughing or any other tillage operation. However, this subsequent handling of the unwanted crop material remains is not part of the present invention and therefore will not further be discussed here.

When tough or "sensitive" crop and crop conditions are encountered which do not permit an acceptable stripping operation, the header according to the present invention is set as shown in Figure 3. There indeed are crops and crop conditions which either do not permit stripping or of which the stripping operation is less than satisfactory. This may be the case in certain lodged and/or entangled crop conditions which otherwise advantageously can be harvested by stripping. There also exist several kinds of "sensitive" crops which preferably should not be harvested by stripping because unacceptable harvesting losses would occur. This is the case e.g. with peas, beans, soybeans, oil seed rape, etc. These are the types of crops which conventionally, advantageously are harvested with so-called draper headers.

Considering the header setting illustrated in Figure 3, it will be noticed that the stripper rotor 66 is raised to a position at a distance above the cutterbar 50 and the draper apparatus 45. As a matter of fact, the stripper rotor is placed in the position normally taken by a reel on a conventional grain header and indeed, the stripper rotor 66 is set according to Figure 3, to act as a so-called bat reel. To this end, the direction of rotation is reversed and the rotor 66 now is rotated in the anti-clockwise direction 70 as viewed in Figure 3 at a substantially lower speed than when set for stripping. This rotational speed preferably is in the range of 15 to 100 rpm. Also the height setting of the rotor 66 is adjustable to accomodate changing crops and crop conditions.

The cover shields 67, 68 are shifted together in a retracted, inoperative position in which they least obstruct the sight of the operator on the harvesting operation. Alternatively and indeed preferably, the cover shields 67, 68 are removed so as to avoid any obstruction at all of the operator's sight.

In still another approach, the stripper rotor 66 may be raised even higher to a fully retracted and inoperative position totally out of reach of the crop material being harvested. With this setting, the harvesting operation no longer involves any reeling action and thus this harvesting operation is done exclusively by the cutterbar 50 and the draper apparatus 45 in combination with the forward motion of the combine harvester. In this condition, the drive to the stripper rotor 66 indeed may be interrupted. Moreover, as in this condition, the rotor 66 is totally inoperative, it may be removed all together.

With the setting of Figure 3, the cutterbar 50 should cut the standing crop material and thus, the shield or cover plate 51 is removed and the cutterbar drive is engaged. Also, the header 20 is lowered so as to position the cutterbar 50 at the selected, relatively close spacing above the ground level as is conventional and which depends a.o. on the stubble length that is considered to be acceptable.

In operation of the header 20 when set as shown in Figure 3, the combine harvester is moved forwardly at a relatively lower speed than is possible during a normal stripping operation. The cutterbar 50 is disposed to cut standing crop material and the rotor 66, when positioned and driven to act as a bat reel, is operable to engage the crop material being cut and to assist in moving this cut crop material towards the draper apparatus 35 and to deposit this material on the draper conveyor 45 thereof. As is conventional in draper headers, the draper apparatus 35, in turn, conveys the cut crop material including both wanted and unwanted parts, towards the header auger 40 for further transport thereby to the base unit 2 for threshing, separating and cleaning.

From what precedes, it thus will be appreciated that the present invention provides a universal header for a combine harvester which, at wish, may be set, on the one hand, to strip harvest crops whenever possible or desirable so as to substantially improve the harvesting capacity or, on the other hand, to harvest crop material in a conventional manner, i.e. to harvest the wanted crop material together with substantial portions of the unwanted material, whenever strip harvesting is neither possible nor desirable. The setting for using the cutterbar 50 together with the draper apparatus 35 eventually in combination with the stripper rotor 66 set to operate as a bat reel, enables the harvesting, in an acceptable way, of, on the one hand, the toughest crops and crop conditions such as may be encountered in lodged crops and, on the other hand, those crops which are most sensitive to harvesting losses. Thus, the header according to the invention is conveniently adaptable to a wide range of crops and crop conditions. This header further also leaves the option to the operator, in the conditions where strip harvesting is possible and normally is preferred, to nevertheless harvest the crop material in a conventional manner i.e. with substantial parts of the unwanted crop material passing through the base unit. This may be the case when it is preferred to obtain baleable straw in addition to the grain.

The present invention avoids the need, for the operator, who has choosen for strip harvesting where possible and thus, who has elected to buy a stripper header, to additionally provide a back-up header of the conventional type for those conditions where strip harvesting is neither possible nor acceptable. The universal header according to the present invention is therefore both more cost-efficient and more practical in use than the approach known so far and involving the provision of both a conventional grain header with cutterbar, reel and auger on the one hand and a conventional, single purpose stripper header on the other hand.

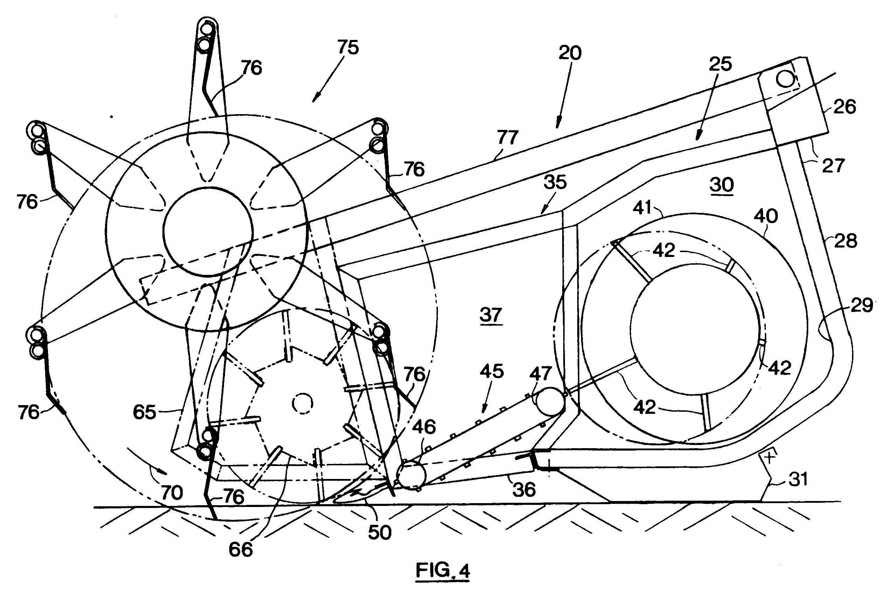

It will be understood that changes in the details, steps and arrangement of parts, which have been described and illustrated to explain the nature of the invention, will occur to and may be made by those skilled in the art without departing from the scope of the invention upon a reading of this disclosure. One such an alternative embodiment of the present invention is illustrated in Figure 4.

This embodiment is identical to the embodiment shown in Figures 2 and 3 except for the fact that, for harvesting crops for which strip harvesting is not suited, the stripper apparatus is replaced by a conventional reel 75 with position controlled reel tines 76. This conventional reel 75 may be fore-and-aft adjustably mounted on a pair of transversely spaced apart reel arms 77 which, in turn, are pivotally mounted on the header main beam 26. Hydraulic cylinders (not shown) extend between the header end walls 30 and the corresponding reel arms 77 to enable height adjustment of the reel 75 in the conventional manner. The reel 75 may be driven by any conventional mechanical or hydrostratic drive means (equally not shown).

The stripper apparatus 60 preferably is removably supported on the reel arms 77 rather than on separate stripper arms 61 as is the case in the preferred embodiment according to Figures 2.and 3.

It will be appreciated that replacement of the stripper apparatus 60 by the conventional reel 75 is more cumbersome than switching the preferred embodiment of the present invention as shown in Figures 2 and 3 from the one setting to the other. Yet, the arrangement according to Figure 4 nevertheless still represents a progress over the state-of-the-art in as much as this arrangement still is more cost-efficient than the provision of a conventional grain header with a cutterbar, a reel and an auger on the one hand and a conventional stripper header on the other hand.

Moreover, in the combination illustrated in Figure 4, the conventional reel 75 cooperates with the draper apparatus 45 in addition to with the cutterbar 50. This, by itself, is already quite advantageous in as much as the presence of the draper apparatus greatly improves the harvesting efficiency in as well the aforementioned loss sensitive crops as in the equally aforementioned crops and crop conditions which are tough to harvest. Conventional grain headers not having a draper apparatus equally may encounter difficulties in dealing with these crops and crop conditions.

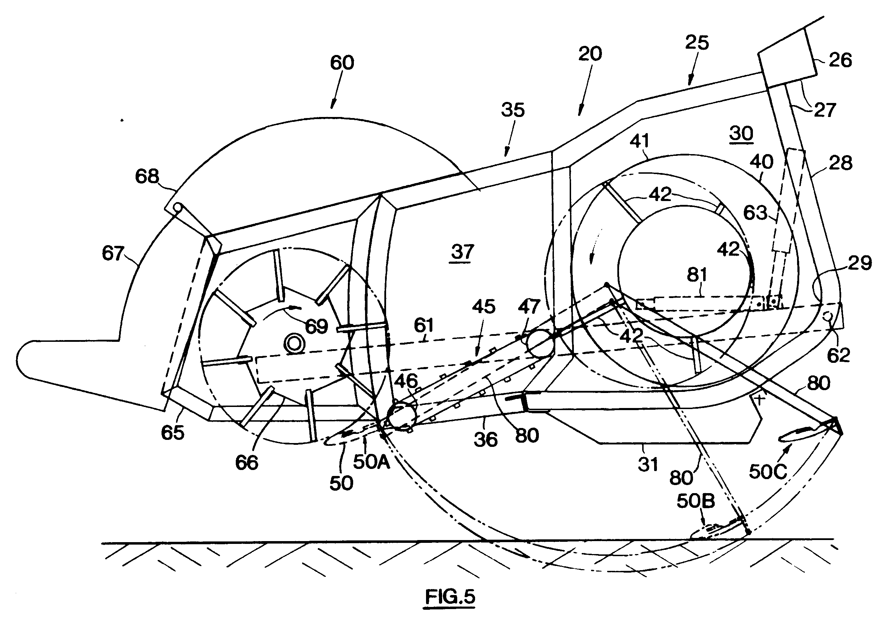

Turning to Figure 5, yet another embodiment of the present invention now will be decribed. This embodiment again is basically identical to the arrangement shown in Figures 2 and 3, except for the fact that the cutterbar 50 is adjustable in a number of positions. To this end, the cutterbar 50 is mounted at its transversely opposite ends on parallelogram linkages 80 which themselves adjustably are supported on the corresponding header side walls 30. Position control means in the form of hydraulic cylinders 81 operatively are coupled between the parallelogram linkages 80 and the corresponding header side walls 30 to enable adjustment of the cutterbar 50 in any one of a number of positions. The parallelogram linkages 80 and the position control means 81 together form adjustment means for the cutterbar 50.

It will be noted that, because of these parallelogram linkages 80, the orientation of the cutterbar 50 remains the same irrespective of the adjustment position in which this cutterbar 50 is placed.

In this arrangement, the drive to the cutterbar 50 preferably is of the hydrostatic type so as to provide a simple drive arrangement which does not interfere with the adjustability of the cutterbar 50. Nevertheless, mechanical cutterbar drive means equally could be conceived which also do not intefere with this adjustability of the cutterbar 50.

When the header is set for strip harvesting crops, the cutterbar 50 is not needed, at least not at the location forwardly of the draper apparatus 45. Accordingly, this cutterbar 50 may be moved to a fully retracted position 50C rearwardly of the skids 31. In this position the drive to the cutterbar 50 is disengaged as no mowing or cutting is required. Should the cutterbar 50 have insufficient rigidity of its own, a support may be provided on the header frame 27 for attaching the cutterbar 50 thereto at locations transversely spaced apart along its length. This coupling to said support may be in the form of bolting or in any other convenient way which preferably quickly can be established, respectively undone.

Alternatively, the cutterbar 50 may be swung to an intermediate position 50B at a substantial position beneath the skids 31. In this position, the cutterbar 50 is used to cut standing crop stems after they have been stripped and thus, in this combination, the unwanted crop material is mown together with the stripping operation during one and the same pass of the harvester across the crop field. This thus may save one further pass with a different type of machinary across the field for disposing of the unwanted crop material. From the foregoing it also will be appreciated that, under these circumstances, the cutterbar drive should remain engaged for driving the cutterbar 50.

In connection with the foregoing, it also will be remembered that, when the header 20 is set for strip harvesting, this header 20 usually is raised to a somewhat higher position above the ground level so that the stripper rotor 66 engages the standing crop material at the ears thereof. Consequently, the cutterbar 50 indeed should be positioned correspondingly below the level of the skids 31 if the stripped crop stems are to be mown.

However, as the position of the header 20 above the ground level is critical when strip harvesting, and as this height setting greatly depends on the type and condition of the crop being harvested, it also will be appreciated that the height setting of the header 20 frequently is adjusted during operation. As a matter of fact, a mechanism may be provided for automatically adapting the header position to the crops being harvested.

Consequently, it also is necessary to floatingly suspend the cutterbar 50 so as to permit this cutterbar 50 to follow the ground contour as the combine harvester moves forwardly. The parallelogram linkages 80 described herebefore conveniently permit such floating operation provided, of course, the position control means 81 do not interfere therewith. To avoid such interference, the position control means 81 preferably are disconnected from the parallelogram linkages 80. To facilitate this, the position control means 81 preferably are coupled to the parallelogram linkages 80 via the intermediary of quick release coupling means (not shown).

The cutterbar 50 preferably may be provided with ground engaging skids (not shown) or ground engaging gauge wheels (equally not shown) to support said cutterbar 50 on the ground during operation. Ground engaging skids may be coupled to the cutterbar 50 at transversely spaced apart locations along the length thereof. In case gauge wheels are provided, these preferably are provided only at the opposite ends of the cutterbar 50 although again, it nevertheless also is possible to provide gauge wheels intermediate the outer ends of the cutterbar 50 provided these gauge wheels are disposed rearwardly of the cutterbar.

In case the cutterbar 50 is disposed to follow the ground contour as described hereabove, then an eventual limited rigidity of the cutterbar 50 normally will not present a problem and thus no special provisions should be made to rigidify this cutterbar 50. As a matter of fact, some flexibility in the cuttebar may be found to be advantageous in case the cutterbar has to follow the ground contour. Indeed, this flexibility will permit the cutterbar 50 to follow the ground contour even more closely than would be the case with a rigid cutterbar. This characteristic, by itself, is already known in the state-of-the-art from the so-called "flexheaders" which are used for harvesting e.g. soybeans.

In case the header 20 is used for harvesting crops in the conventional manner, i.e. in case the wanted and substantial portions of the unwanted crop material are taken into the machine, the cutterbar 50 is moved into the forward position 50A in the immediate proximity of the leading edge of the bottom wall 36 of the draper apparatus 45. The cutterbar 50 may be attached to this leading edge to exclude any flexing of said cutterbar 50 in case this would be preferred. Alternatively, the cutterbar 50 also may be permitted to follow the ground contour provided movement relative to the draper apparatus leading edge does not become excessive, i.e. provided the cutterbar 50 does not drop too far below the leading edge of the draper apparatus. Stops (not shown) may be provided which restrict the flotational movement relative to the draper apparatus 45.

In case the cutterbar 45 is permitted to floatingly follow the ground contour, some flexing of the cutterbar 50 may be acceptable for the reasons as already explained herebefore.

In any event, when the cutterbar 50 is permitted to floatingly follow the ground contour, ground engaging skids or gauge wheels again have to be provided in the manner as has already been described in connection with the cutterbar 50 when placed in the intermediate position 50B.

With the cutterbar 50 placed in the position 50A, the stripper apparatus 60 is to be placed in the raised position and driven in the direction 70 as described with reference to Figure 3.

It further also will be appreciated that the alterations from the preferred embodiment of Figures 2 and 3 and as described hereabove with reference to the Figures 4 and 5 also may be combined to form yet another embodiment of the present invention. This embodiment thus would combine the adjustable cutterbar 50 which may be placed in any of the positions 50A, B, C and any of the positions therebetween with a stripper apparatus 60 which may be replaced by a conventional reel 75.

## Claims

1. A header (20) for harvesting combinable crops comprising :
- a header main body (25);
- a header auger (40);
- stripper means (60) at a location forwardly of the header auger (40) when seen in the direction of forward operative travel of the header (20) and operable, in use, to strip wanted crop material from standing crop stems; and
- mower means (50);
said header (20) being characterized in that it further also comprises :
- draper means (35) between the stripper means (60) and the mower means (50) on the one hand and the header auger (40) on the other hand; the mower means (50) being operable, in use, to sever standing crop material comprising crop stems with wanted crop material thereon from the stubble;
- means associated with the mower means (50) for making these mower means (50), at wish, operable, respectively inoperable to perform said severing function; and
- means associated with the stripper means (60) for making these stripper means (60), at wish, operable, respectively inoperable to perform said stripping function;
the arrangement being such that the header (20) is adjustable, at wish, in either one of the following operating conditions wherein :
a) either the mower means (50) are made inoperable to perform said severing function and the stripper means (60) are made operable to perform said stripping function and deliver wanted crop material to the draper means (35) for further transport thereby to the header auger (40), or
b) the stripper means (60) are made inoperable to perform said stripping function and the mower means (50) are made operable to perform said severing function and permit delivery of severed crop material to the draper means (35) for further transport thereby to the header auger (40).

2. A header (20) according to claim 1 characterized in that the header main body (25) is attachable to a combine harvester base unit (2) in a manner which permits adjustment of the position of the header (20) above the ground.

3. A header (20) according to claim 1 or 2 characterized in that :
- the header main body (25) is generally trough shaped and oriented generally transversely when seen in the direction of operative travel of the header (20), and
- the header auger (40) is provided within said trough shape; said auger (40) comprising transversely spaced apart and oppositely oriented consolidating auger flights (41) and a central section with retractable feeder elements (42).

4. A header (20) according to any of the preceding claims characterized in that the draper means (35) comprise:
- a subframe including a bottom wall (36) and transversely opposite side walls (37); said subframe being attachable to the header main body (25), and
- a draper conveyor (45) supported on the subframe and inclined upwardly from front to rear as seen in the direction of operative travel of the header (20).

5. A header (20) according to claim 4 when appended to claim 3, characterized in that the draper conveyor (45) has its rear discharge end positioned proximate to the forward end of the header auger (40) at a level above the lower end thereof.

6. A header (20) according to claim 4 or 5 characterized in that said means associated with the mower means (50) comprise means for removably mounting the mower means (50) on the draper subframe (36, 37) generally at a forward and lower transverse end thereof.

7. A header (20) according to claim 4 or 5 characterized in that :
- the mower means (50) are mounted on the draper subframe (36, 37) generally at a forward and lower transverse end thereof, and
- said means associated with the mower means (50) comprise shielding means (51) which are positionable to shield the mower means (50) from contact with crop stems to thereby make said mower means (50) inoperable.

8. A header (20) according to claim 7 characterized in that said means associated with the mower means (50) further also comprise drive means for driving the mower means (50); said drive means being disengageable for interrupting the drive to the mower means (50) when the shielding means (51) are placed in the shielding position.

9. A header (20) according to claim 4 or 5 charaterized in that said means associated with the mower means (50) comprise means for mounting the mower means (50) on the header main body (25) in a manner to be adjustable between :
- a first position (50A) generally at the forward and lower transverse end of the draper means (35) for severing crop stems, and
- at least one further position (50B/50C) to the rear of said first position (50A).

10. A header (20) according to claim 9 characterized in that said mounting means comprise a parallelogram linkage (80) generally at each transversely opposite side of the header (20) for adjustably supporting the transversely opposite ends of the mower means (50) on the corresponding transversely opposite header side walls (30).

11. A header (20) according to claim 10 characterized in that said mounting means further also comprise position control means (81) operatively coupled between each parallelogram linkage (80) and the corresponding header side wall (30).

12. A header (20) according to claim 10 or 11, characterized in that the said means associated with the mower means (50) further also comprise attachment means for attaching the mower means (50) to the forward and lower transverse end of the draper subframe (36, 37) when said mower means (50) are adjusted in said first position (50A).

13. A header (20) according to any of the claims 9 to 12, characterized in that said at least one further position of the mower means (50) is a retracted, inoperative position (50C) out of reach of the standing crop stems.

14. A header (20) according to claim 13 characterized in that :
- the header main body (25) is provided at its lower end with ground engageable skids (31), and
- the mower means (50), when adjusted in said retracted, inoperative position (50C), are disposed behind said skids (31) and above the level of the underside thereof.

15. A header (20) according to claim 13 or 14 characterized in that said means associated with the mower means (50) further also comprise support means provided on the header main body (25) and to which the mower means (50), when adjusted in said retracted, inoperative position (50C), are attachable.

16. A header (20) according to any of the claims 9 to 15 characterized in that said means associated with the mower means (50) further also comprise adjustment means for adjusting the mower means (50) in a position (50B) at a distance below the level of the underside of the header main body (25) and at a distance behind the forward end of the draper conveyor (45).

17. A header (20) according to claim 16 characterized in that, when placed in said position (50B) below the level of the underside of the header main body (25), said mower means (50) are permitted, in use, to floatingly follow the ground contour.

18. A header (20) according to any of the claims 9 to 11, respectively any of the claims 13 to 15 when appended to any of said claims 9 to 11 and characterized in that, when placed in said first position (50A), said mower means (50) are permitted, in use, to floatingly follow the ground contour.

19. A header (20) according to claim 18 characterized in that stop means are provided for limiting the flotational movement of the mower means (50) in the proximity of said forward and lower transverse end of the draper means (45).

20. A header (20) according to any of the claims 17 to 19 when appended directly or indirectly to claim 11 and characterized in that the adjustment means (80, 81) include disengageable coupling means between the position control means (81) and the parallelogram linkages (80); said coupling means coupling the position control means (81) to the parallelogram linkages (80) when engaged and disconnecting the position control means (81) from the parallelogram linkages (80) when disengaged to thereby permit said flotational movement of the mower means (50).

21. A header (20) according to any of the claims 17 to 20 characterized in that the mower means (50) are equiped with ground engageable members in the form of either skids or gauge wheels for supporting said mower means (50) on the ground during the flotational movement thereof along the ground surface.

22. A header (20) according to any of the claims 13 to 15 or any of the claims 16 to 21 when appended to any of said claims 13 to 15 and characterized in that said means associated with the mower means (50) further also comprise hydrostatic drive means for driving the mower means (50) when placed in any position (50A, 50B) other than the retracted inoperative position (50C).

23. A header (20) according to claim 17 or any of the claims 20 to 22 when appended to claim 17 and characterized in that automatic header height adjustment means are provided which, in use, are operable to position the header (20) so that the stripper means (60) engage the standing crop material at the height of the ears thereof to strip said ears therefrom while permitting the mower means (50) to follow the ground contour at said position below the underside of the header main body (25) and rearwardly of the forward end of the draper conveyor (45) to cut the standing crop stems after the ears have been stripped therefrom.

24. A header (20) according to any of the claims 4 to 23 characterized in that :
- the stripper means (60) comprise a stripper rotor (66), and
- the means associated with the stripper means (60) comprise adjustment means for adjusting the stripper means (60) between a lowered, stripping position wherein said rotor (66) is disposed with its lower end generally at the level of the forward end of the draper conveyor (45) and a raised position at a distance above said level.

25. A header (20) according to claim 24 characterized in that the adjustment means comprise :
- transversely spaced apart, generally fore-and-aft extending mounting arms (61/77) which, at one end, pivotally are mounted on the header main body (25) and which, generally at or adjacent the other end, carry the stripper means (60), and
- position control means (63) operatively extending between said arms (61/77) and the corresponding header side walls (30) for adjusting the height setting of the stripper means (60) relative to the draper conveyor (45).

26. A header (20) according to claim 24 or 25 characterized in that the stripper means (60) further also comprise side walls (65) provided at the transversely opposite sides of the stripper rotor (66) and which match with the corresponding side walls (37) of the draper means (35) when placed in said lowered stripping position.

27. A header (20) according to any of the claims 24 to 26 characterized in that said means associated with the stripper means (60) comprise reversible, variable speed drive means for driving the stripper rotor (66).

28. A header (20) according to claim 27 characterized in that said means associated with the stripper means (60) further also comprise drive means for driving the stripper means (60); the arrangement being so that :
- in the strip harvesting, lowered position of the stripper means (60), the stripper rotor (66) is rotated at a first speed in a first direction (69) so as to strip wanted crop material from standing crop stems and to deliver this material overtop to the draper means (35), and
- when the stripper means (60) are in the raised position, the stripper rotor (66) is rotated in the opposite direction (70) and at a speed which is lower than said first speed; the arrangement being so as to convey crop material comprising crop stems with wanted crop material thereon rearwardly in an undershot mode.

29. A header (20) according to claim 28 characterized in that the drive means for the stripper means (60) are of the hydrostatic type and are operable to rotate the stripper rotor (66) in the first direction (69) at a speed in the range of 600 to 750 rpm and in the opposite direction (70) at a speed in the range of 15 to 100 rpm.

30. A header (20) according to any of the claims 24 to 29 characterized in that the stripper means (60) further also include at least one pair of collapsible stripper cover shields (67, 68) which are adjustable between, on the one hand, an extended operative position basically extending around the forward and top portion of the stripper rotor (66) to cooperate therewith in the strip harvesting mode and, on the other hand, a retracted position basically above and to the front of the stripper rotor (66) so as to limit the obstruction of the operator's sight on the header functions when the header (20) is set with the stripper rotor (66) in said raised postion.

31. A header (20) according to any of the claims 24 to 29 characterized in that the stripper means (60) further also include removable shielding means (67, 68) which, when installed, basically extend around the forward and top portions of the stripper rotor (66) to cooperate therewith in the strip harvesting mode, and which are removable so as to avoid obstruction of the operator's sight on the header functions when the header (20) is set with the stripper rotor (66) in said raised position.

32. A header (20) according to any of the claims 24 to 26 characterized in that :
- said means associated with the stripper means comprise drive means which, in the strip harvesting mode of the header (20) with the stripper rotor (66) placed in said lowered stripping position, are operable to rotate said stripper rotor (66) so as to strip wanted crop material from standing crop stems and to deliver this material overtop to the draper means (35),
- said raised position of the stripper rotor (66) is a fully retracted and inoperative position wherein the stripper rotor (66), in use of the header (20), does not contact crops standing in the field, and
- said drive means are disengageable to permit interruption of the drive to the stripper rotor (66) when placed in said raised position.

33. A header (20) according to any of the claims 4 to 23 characterized in that said means associated with the stripper means (60) comprise mounting means for removably mounting the stripper means (60) on the header main body (25) in a manner to permit, at wish :
- installation of said stripper means (60) on the header main body (25) to thereby enable the stripper means (66) and the draper means (35) to cooperate for strip harvesting wanted crop material from crops standing in the field, and
- removal of said stripper means (60) from the header main body (25) to thereby enable the mower means (50) and the draper means (35) to cooperate for harvesting crops standing on the field without involving the stripper means (60).

34. A header (20) according to any of the claims 4 to 23 characterized in that said means associated with the stripper means (60) comprise mounting means for removably mounting either the stripper means (60) or a reel structure (75) including position controlled reel tines (76) on the header main body (25); the arrangement being such that, at wish :
- either the stripper means (60) may be installed on the header main body (25) to thereby enable these stripper means (60) and the draper means (35) to cooperate for strip harvesting wanted crop material from crops standing in the field,
- or the reel structure (75) may be installed on the header main body (25) thus replacing the stripper means (60) to thereby enable this reel structure (75) to cooperate with the mower means (50) and the draper means (35) to harvest crops standing in the field without involving the stripper means (60).

## Patentansprüche

1. Vorsatzgerät (20) zum Ernten von in einem Mähdrescher zu verarbeitenden Erntematerialien, mit:
- einem Vorsatzgeräte-Hauptkörper (25);
- einer Vorsatzgeräte-Förderschnecke (40);
- Abstreifeinrichtungen (60) an einer Stelle vor der Vorsatzgeräte-Förderschnecke (40) bei Betrachtung in Richtung der Betriebs-Vorwärtsbewegung des Vorsatzgerätes (20, wobei die Abstreifeinrichtungen im Betrieb so betreibbar sind, daß sie gewünschtes Erntematerial von den stehenden Erntematerialstengeln abstreifen; und
- Mäheinrichtungen (50);
wobei das Vorsatzgerät (20) dadurch gekennzeichnet ist, daß es weiterhin folgende Teile aufweist:
- Tuchförderer-Einrichtungen (35) zwischen den Abstreifeinrichtungen (60) und den Mäheinrichtungen (50) einerseits und der Vorsatzgeräte-Förderschnecke (40) andererseits, wobei die Mäheinrichtungen (50) im Betrieb betreibbar sind, um stehendes Erntematerial, das Erntematerialstengel mit daran befindlichem gewünschtem Erntematerial umfaßt, von der Stoppel abzutrennen;
- mit den Mäheinrichtungen (50) verbundene Einrichtungen, die diese Mäheinrichtungen (50) nach Wunsch zur Durchführung der genannten Abtrennfunktion wirksam bzw. unwirksam machen; und
- mit den Abstreifeinrichtungen (60) verbundene Einrichtungen, die diese Abstreifeinrichtungen (60) nach Wunsch zur Durchführung der Abstreiffunktion wirksam bzw. unwirksam machen;
wobei die Anordnung derart ist, daß das Vorsatzgerät (20) nach Wunsch auf einen der folgenden Betriebszustände einstellbar ist, in denen:
a) entweder die Mäheinrichtungen (50) zur Durchführung der Abtrennfunktion unwirksam gemacht werden, während die Abstreifeinrichtungen (60) zur Durchführung der Abstreiffunktion und zur Zuführung von gewünschtem Erntematerial an die Tuchförderer-Einrichtungen (35) zum weiteren Transport durch diese zu der Vorsatzgeräte-Förderschnecke (40) wirksam gemacht werden, oder
b) die Abstreifeinrichtungen (60) unwirksam gemacht werden, so daß sie die Abstreiffunktion nicht mehr durchführen, während die Mäheinrichtungen (50) wirksam gemacht werden, um die Abtrennfunktion durchzuführen und um die Zuführung von abgetrenntem Erntematerial an die Tuchförderer-Einrichtungen (35) zum Weitertransport an die Vorsatzgeräte-Förderschnecke (40) zu ermöglichen.

2. Vorsatzgerät (20) nach Anspruch 1,
dadurch gekennzeichnet, daß der Vorsatzgeräte-Hauptkörper (25) an einer Mähdrescher-Grundeinheit in einer derartigen Weise befestigbar ist, daß eine Einstellung der Position des Vorsatzgerätes (20) oberhalb des Bodens ermöglicht wird.

3. Vorsatzgerät (20) nach Anspruch 1 oder 2,
dadurch gekennzeichnet, daß
- der Vorsatzgeräte-Hauptkörper (25) allgemein wannenförmig und allgemein in Querrichtung bei Betrachtung in Richtung der Betriebsbewegung des Vorsatzgerätes (20) ausgerichtet ist, und
- die Vorsatzgeräte-Förderschnecke (40) in der Wannenform vorgesehen ist, wobei diese Förderschnecke (40) in Querrichtung mit Abstand voneinander angeordnete und entgegengesetzt gerichtete Verdichtungs-Schneckenflügel (41) und einen Mittelabschnitt mit zurückziehbaren Zuführungselementen (42) umfaßt.

4. Vorsatzgerät (20) nach einem der vorhergehenden Ansprüche, dadurch gekennzeichnet, daß die Tuchförderer-Einrichtungen (35) folgende Teile umfassen:
- einen Hilfsrahmen, der eine Bodenwand (36) und in Querrichtung entgegengesetzt liegende Seitenwände (37) einschließt, wobei der Hilfsrahmen an dem Vorsatzgeräte-Hauptkörper (25) befestigbar ist, und
- einen Tuchförderer (45), der an dem Hilfsrahmen gehaltert und von vorne nach hinten nach oben hin bei Betrachtung in der Richtung der Betriebsbewegung des Vorsatzgerätes (20) geneigt ist.

5. Vorsatzgerät (20) nach Anspruch 4 unter Rückbeziehung auf Anspruch 3,
dadurch gekennzeichnet, daß der Tuchförderer (45) mit seinem hinteren Abgabeende in der Nähe des vorderen Endes der Vorsatzgeräte-Förderschnecke (40) in einer Höhenlage oberhalb des unteren Endes dieser Förderschnecke angeordnet ist.

6. Vorsatzgerät (20) nach Anspruch 4 oder 5,
dadurch gekennzeichnet, daß die mit den Mäheinrichtungen (50) verbundenen Einrichtungen Einrichtungen zur entfernbaren Befestigung der Mäheinrichtungen (50) an dem Tuchförderer-Hilfsrahmen (36,37) allgemein an einem vorderen und unteren querverlaufenden Ende hiervon umfassen.

7. Vorsatzgerät (20) nach Anspruch 4 oder 5,
dadurch gekennzeichnet, daß:
- die Mäheinrichtungen (50) an dem Tuchförderer-Hilfsrahmen (36,37) allgemein an einem vorderen und unteren querverlaufenden Ende hiervon befestigt sind, und
- die mit den Mäheinrichtungen (50) verbundenen Einrichtungen Abschirmeinrichtungen (51) umfassen, die so anzuordnen sind, daß die Mäheinrichtungen (50) gegenüber einer Berührung mit den Erntematerialstengeln abgeschirmt sind, so daß auf diese Weise die Mäheinrichtungen (50) unwirksam gemacht werden.

8. Vorsatzgerät (20) nach Anspruch 7,
dadurch gekennzeichnet, daß die mit den Mäheinrichtungen (50) verbundenen Einrichtungen weiterhin Antriebseinrichtungen zum Antrieb der Mäheinrichtungen (50) umfassen, wobei die Antriebseinrichtungen auskuppelbar sind, um den Antrieb an die Mäheinrichtungen (50) zu unterbrechen, wenn die Abschirmeinrichtungen (51) in die Abschirmstellung gebracht werden.

9. Vorsatzgerät (20) nach Anspruch 4 oder 5,
dadurch gekennzeichnet, daß die mit den Mäheinrichtungen (50) verbundenen Einrichtungen Einrichtungen zur Befestigung der Mäheinrichtungen (50) an dem Vorsatzgeräte-Hauptkörper (25) in einer derartigen Weise umfassen, daß die Mäheinrichtungen zwischen:
- einer ersten Position (50A) allgemein am vorderen und unteren querverlaufenden Ende der Tuchförderer-Einrichtungen (35) zum Abtrennen von Erntematerialstengeln, und
- zumindestens einer weiteren Position (50B/50C) rückwärts von dieser ersten Position (50A) einstellbar sind.

10. Vorsatzgerät (20), nach Anspruch 9,
dadurch gekennzeichnet, daß die Befestigungseinrichtungen ein Parallelogrammgestänge (80) allgemein an jeder in Querrichtung gegenüberliegenden Seite des Vorsatzgerätes (20) umfassen, um die in Querrichtung gegenüberliegenden Enden der Mäheinrichtungen (50) in einstellbarer Weise auf den entsprechenden in Querrichtung gegenüberliegenden Vorsatzgeräte-Seitenwänden (30) zu haltern.

11. Vorsatzgerät (20) nach Anspruch 10,
dadurch gekennzeichnet, daß die Befestigungseinrichtungen weiterhin Positionssteuereinrichtungen (81) umfassen, die betriebsmäßig zwischen jedem Parallelogrammgestänge (80) und der entsprechenden Vorsatzgeräte-Seitenwand (30) eingeschaltet sind.

12. Vorsatzgerät (20) nach Anspruch 10 oder 11,
dadurch gekennzeichnet, daß die mit den Mäheinrichtungen (50) verbundenen Einrichtungen weiterhin Befestigungseinrichtungen zur Befestigung der Mäheinrichtungen (50) an dem vorderen und unteren querverlaufenden Ende des Tuchförderer-Hilfsrahmens (36, 37) umfassen, wenn die Mäheinrichtungen (50) auf die erste Position (50A) eingestellt sind.

13. Vorsatzgerät (20) nach einem der Ansprüche 9 bis 12, dadurch gekennzeichnet, daß die zumindestens eine weitere Position der Mäheinrichtungen (50) eine zurückgezogene Ruhestellung (50C) außerhalb des Bereiches der stehenden Erntematerialstengel ist.

14. Vorsatzgerät (20) nach Anspruch 13,
dadurch gekennzeichnet, daß:
- der Vorsatzgeräte-Hauptkörper (25) an seinem unteren Ende mit mit dem Boden in Eingriff bringbaren Gleitkufen (31) versehen ist, und
- die Mäheinrichtungen (50) bei ihrer Einstellung auf die zurückgezogene Ruhestellung (50C) hinter den Gleitkufen (51) und oberhalb der Höhenlage von deren Unterseite angeordnet sind.

15. Vorsatzgerät (20) nach Anspruch 13 oder 14,
dadurch gekennzeichnet, daß die mit den Mäheinrichtungen (50) verbundenen Einrichtungen weiterhin Halterungseinrichtungen umfassen, die an dem Vorsatugeräte-Hauptkörper (35) vorgesehen sind und an denen die Mäheinrichtungen (50) bei ihrer Einstellung auf die Zurückgezogene Ruhestellung (50C) befestigbar sind.

16. Vorsatzgerät (20) nach einem der Ansprüche 9 bis 15,
dadurch gekennzeichnet, daß die mit den Mäheinrichtungen (50) verbundenen Einrichtungen weiterhin Einstelleinrichtungen zur Einstellung der Mäheinrichtungen (50) auf eine Position (50B) in einem Abstand unterhalb der Höhenlage der Unterseite des Vorsatzgeräte-Hauptkörpers (25) und in einer Entfernung hinter dem vorderen Ende des Tuchförderers (45) umfassen.

17. Vorsatzgerät (20) nach Anspruch 16,
ddurch gekennzeichnet, daß die Mäheinrichtungen (50) bei Anordnung auf der Position (50B) unterhalb der Höhenlage der Unterseite des Vorsatzgeräte-Hauptkörpers (25) im Betrieb schwimmend der Bodenkontur folgen können.

18. Vorsatzgerät (20) nach einem der Ansprüche 9 bis 11 bzw. einem der Ansprüche 13 bis 15 unter Rückbeziehung auf einen dieser Ansprüche 9 - 11,
dadurch gekennzeichnet, daß wenn die Mäheinrichtungen (50) auf die erste Position (50A) gebracht sind, die Mäheinrichtungen im Gebrauch schwimmend der Bodenkontur foolgen können.

19. Vorsatzgerät (20) nach Anspruch 18, dadurch gekennzeichnet, daß Anschlageinrichtungen zur Begrenzung
der Schwimmbewegung der Mäheinrichtungen (50) in der Nähe des vorderen und unteren querverlaufenden Endes der Tuchförderer-Einrichtungen (45) vorgesehen sind.

20. Vorsatzgerät (20) nach einem der Ansprüche 17 bis 19 unter direkter oder indirekter Rückbeziehung auf Anspruch 11,
dadurch gekennzeichnet, daß die Einstelleinrichtungen (80,81) auskuppelbare Kupplungseinrichtungen zwischen den Positionssteuereinrichtungen (81) und den Parallelogrammgestängen (80) einschließen, daß die Kupplungseinrichtungen die Positionssteuereinrichtungen (81) mit den Parallelogrammgestängen (80) im eingekuppleten Zustand verbinden und die Positionssteuereinrichtungen (81) von den Parallelogrammgestängen (80) im ausgekuppelten Zustand trennen, um auf diese Weise die Schwimmbewegung der Mäheinrichtungen (50) zu ermöglichen.

21. Vorsatzgerät (20) nach einem der Ansprüche 17 bis 20,
dadurch gekennzeichnet, daß die Mäheinrichtungen (50) mit mit dem Boden in Eingriff bringbaren Teilen in Form von entweder Gleitkufen oder Fühlerrädern ausgerüstet sind, um die Mäheinrichtungen (50) während deren Schwimmbewegung entlang der Bodenoberfläche auf dem Boden abzustützen.

22. Vorsatzgerät (20) nach einem der Ansprüche 13 bis 15 oder einem der Ansprüche 16 bis 21 unter Rückbeziehung auf einen der Ansprüche 13 bis 15,
dadurch gekennzeichnet, daß die mit den Mäheinrichtungen (50) verbundenen Einrichtungen weiterhin hydrostatische Antriebseinrichtungen zum Antrieb der Mäheinrichtungen (50) umfassen, um die Mäheinrichtungen (50) anzutreiben, wenn diese auf irgendeine Position (50A,50B) gebracht sind, die von der zurückgezogenen Ruhestellung (50C) verschieden ist.

23. Vorsatzgerät (20) nach Anspruch 17 oder einem der Ansprüche 20 bis 22 unter Rückbeziehung auf Anspruch 17,
dadurch gekennzeichnet, daß automatische Vorsatzgeräte-Höheneinstelleinrichtungen vorgesehen sind, die im Betrieb so betreibbar sind, daß sie das Vorsatzgerät (20) derart positionieren, daß die Abstreifeinrichtungen (60) mit dem stehenden Erntematerial an der Höhe von dessen Ähren in Eingriff kommen, um diese Ähren von dem Erntematerial abzustreifen, während es den Mäheinrichtungen (50) ermöglicht wird, der Bodenkontur in der Position unterhalb der Unterseite des Vorsatzgeräte-Hauptkörpers (25) und hinter dem vorderen Ende des Tuchförderers (45) zu folgen, um die stehenden Erntematerialstengel abzumähen, nachdem die Ähren von diesen abgestreift wurden.

24. Vorsatzgerät (20) nach einem der Ansprüche 4 bis 23,
dadurch gekennzeichnet, daß:
- die Abstreifeinrichtungen (60) einen Abstreifer-Rotor (66) umfassen, und
- die mit den Abstreifeinrichtungen (60) verbundenen Einrichtungen Einstelleinrichtungen zur Einstellung der Abstreifeinrichtungen (60) zwischen einer abgesenkten Abstreifposition, in der der Rotor (66) mit seinem unteren Ende allgemein in der Höhenlage des vorderen Endes des Tuchförderers (45) angeordnet ist, und einer angehobenen Position in einem Abstand oberhalb dieser Höhenlage umfassen.

25. Vorsatzgerät (20) nach Anspruch 24,
dadurch gekennzeichnet, daß die Einstelleinrichtungen folgende Teile umfassen:
- in Querrichtung mit Abstand voneinander angeordnete, sich allgemein in Längsrichtung erstreckende Befestigungsarme (61/77), die an einem Ende schwenkbar an dem Vorsatzgeräte-Hauptkörper (25) befestigt sind und die allgemein an oder benachbart zu dem anderen Ende die Abstreifeinrichtungen (60) haltern, und
- Positionssteuereinrichtungen (63), die sich betriebsmäßig zwischen den Armen (61/77) und der entsprechenden Vorsatzgeräte-Seitenwand (30) erstrecken, um die Höheneinstellung der Abstreifeinrichtungen (60) bezüglich des Tuchförderers (45) einzustellen.

26. Vorsatzgerät (20) nach einem der Ansprüche 24 oder 25, dadurch gekennzeichnet, daß die Abstreifeinrichtungen (60) weiterhin Seitenwände (65) umfassen, die an den in Querrichtung gegenüberliegenden Seiten des Abstreifer-Rotors (66) vorgesehen sind und die an die entsprechenden Seitenwände (37) der Ruchförderereinrichtungen (35) angepaßt sind, wenn sie in die abgesenkte Abstreifposition gebracht sind.

27. Vorsatzgerät (20) nach einem der Ansprüche 24 bis 26, dadurch gekennzeichnet, daß die mit den Abstreifeinrichtungen (60) verbundenen Einrichtungen umkehrbare, eine veränderliche Drehzahl aufweisende Antriebseinrichtungen zum Antrieb des Abstreiferrotors (66) umfassen.

28. Vorsatzgerät (20) nach Anspruch 27,
dadurch gekennzeichnet, daß die mit den Abstreifeinrichtungen (60) verbundenen Einrichtungen weiterhin Antriebseinrichtungen zum Antrieb der Abstreifereinrichtungen (60) umfassen, wobei die Anordnung derart ist, daß:
- in der abgesenkten Abstreifernte-Position der Abstreifeinrichtung (60) der Abstreiferrotor (66) mit einer ersten Drehzahl in einer ersten Richtung (69) angetrieben wird, um gewünschtes Erntematerial von den stehenden Erntematerialstengeln abzustreifen und dieses Material über den Abstreiferrotor hinweg zu den Tuchförderereinrichtungen (35 zu liefern, und
- wenn die Abstreifeinrichtungen (60) in der angehobenen Stellung angeordnet sind, der Abstreiferrotor (66) in der entgegengesetzten Richtung (70) und mit einer Drehzahl in Drehung versetzt wird, die kleiner als die erste Drehzahl ist, wobei die Anordnung derart ist, daß Erntematerial, das die Erntematerialstengel und gewünschtes Erntematerial umfaßt, nach hinten über die Unterseite des Abstreiferrotors hinweg gefördert wird.

29. Vorsatzgerät (20) nach Anspruch 28,
dadurch gekennzeichnet, daß die Antriebseinrichtungen für die Abstreifereinrichtungen (60) von hydrostatischen Typ und so betreibbar sind, daß sie den Abstreifer-Rotor (66) in der ersten Richtung (69) mit einer Drehzahl im Bereich von 600 bis 750 Umdrehungen pro Minute und in der entgegengesetzten Richtung (70) mit einer Drehzahl im Bereich von 15 bis 100 Umdrehungen pro Minute in Drehung versetzen.

30. Vorsatzgerät (20) nach einem der Ansprüche 24 bis 29, dadurch gekennzeichnet, daß die Abstreifeinrichtungen (60) weiterhin zumindestens zwei zusammenlegbare Abstreifer-Abdeckabschirmungen (67,68) einschließen, die zwischen einerseits einer ausgefahrenen Betriebsstellung, in der sie sich grundlegend um den vorderen und oberen Teil des Abstreiferrotors (66) erstrecken, um mit diesem in der Abstreif-Erntebetriebsart zusammenzuarbeiten, und andererseits einer zurückgezogenen Position einstellbar sind, in der sie grundlegend oberhalb und an der Vorderseite des Abstreiferrotors (66) angeordnet sind, so daß die Behinderung der Sicht des Betreibers auf die Vorsatzgerätefunktionen verringert wird, wenn der Erntevorsatz (20) so eingestellt ist, daß sich der Abstreiferrotor (66) in der erhöhten Stellung befindet.

31. Vorsatzgerät (20) nach einem der Ansprüche 24 bis 29, dadurch gekennzeichnet, daß die Abstreifeinrichtungen (60) weiterhin entfernbare Abschirmeinrichtungen (67,68) einschließen, die bei ihrer Installation sich grundlegend um die vorderen und oberen Abschnitte des Abstreiferrotors (66) herum erstrecken, um mit diesen in der Abstreif-Erntebetriebsart zusammenzuwirken, und die entfernbar sind, um eine Behinderung der Sicht der Bedienungsperson auf die Vorsatzgerätefunktionen zu vermeiden, wenn das Vorsatzgerät (20) so eingestellt ist, daß sich der Abstreiferrotor (66) in seiner angehobenen Position befindet.

32. Vorsatzgerät nach einem der Ansprüche 24 bis 26,
dadurch gekennzeichnet, daß:
- die mit den Abstreifeinrichtungen verbundenen Einrichtungen Antriebseinrichtungen umfassen, die in der Abstreif-Erntebetriebsart des Vorsatzgerätes (20) mit auf die abgesenkte Abstreifposition gebrachtem Abstreiferrotor (66) derart betreibbar sind, daß der Abstreiferrotor (66) so in Drehung versetzt wird, daß er gewünschtes Erntematerial von den stehenden Erntematerialstengeln abstreift und dieses Material über seinen oberen Bereich hinweg auf die Tuchförderereinrichtungen (35) befördert,
- die angehobene Position des Abstreiferrotors (66) eine vollständig zurückgezogene und Ruhestellung ist, in der der Abstreiferrotor (66) im Betrieb des Vorsatzgerätes (20) nicht mit auf dem Feld stehenden Erntematerial in Berührung kommt, und
- die Antriebseinrichtugnen auskuppelbar sind, um eine Unterbrechung des Antriebs an den Abstreiferrotor (66) zu ermöglichen, wenn dieser auf seine angehobene Position gebracht wurde.

33. Vorsatzgerät (20) nach einem der Ansprüche 4 bis 23,
dadurch gekennzeichnet, daß die mit den Abstreifeinrichtungen (60) verbundenen Einrichtungen Befestigungseinrichtungen zur lösbaren Befestigung der Abstreifeinrichtungen (60) auf dem Vorsatzgeräte-Hauptkörper (25) in einer derartigen Weise umfassen, daß nach Wunsch
- eine Installation der Abstreifeinrichtungen (60) auf den Vorsatzgeräte-Hauptkörper (25) ermöglicht wird, um auf diese Weise zu ermöglichen, daß die Abstreifeeinrichtungen (66) und die Tuchförderer-Einrichtungen (35) für einen Abstreiferntevorgang von gewünschtem Material von Früchten zusammenwirken, die auf dem Feld stehen, und
- eine Entfernung der Abstreifeinrichtungen (60) aus dem Vorsatzgeräte-Hauptkörper (25) ermöglicht wird, um auf diese Weise ein Zusammenwirken der Mäheinrichtungen (50) und der Tuchförderer-Einrichtungen (359 zum Ernten von auf dem Feld stehenden Früchten zu ermöglichen, ohne daß die Abstreifeinrichtungen (60) beteiligt sind.

34. Vorsatzgerät (20) nach einem der Ansprüche 4 bis 23, dadurch gekennzeichnet, daß die mit den Abstreifeinrichtungen (609 verbundenen Einrichtungen Befestigungseinrichtungen zur lösbaren Befestigung entweder der Abstreifeinrichtungen (60) oder einer Haspelstruktur (70), die hinsichtlich ihrer Position gesteuerte Haspelzinken (76) aufweist, auf dem Vorsatzgeräte-Hauptkörper (25) umfassen, wobei die Anordnung derart ist, daß nach Wunsch:
- entweder die Abstreifeinrichtungen (60) auf dem Vorsatzgeräte-Hauptkörper (25) installiert werden können, um ein Zusammenwirken dieser Abstreifeinrichtungen (60) und der Tuchförderer-Einrichtungen (35) für einen Abstreiferntevorgang von gewünschtem Erntematerial von auf dem Feld stehenden Früchten zu ermöglichen,
- oder die Haspelstruktur (75) auf dem Vorsatzgeräte-Hauptkörper (25) installiert werden kann, wodurch die Abstreifeinrichtungen (60) ersetzt werden und es dieser Haspelstruktur (75) ermöglicht wird, mit den Mäheinrichtungen (50) und den Tuchförderer-Einrichtungen (35) zusammenzuwirken, um auf dem Feld stehendes Erntematerial zu ernten, ohne daß die Abstreifeinrichtungen 60) beteiligt sind.

## Revendications

1. Bec cueilleur (20) pour moissonner des récoltes aptes à être moissonnées à l'aide d'une moissonneuse-batteuse, comprenant :
- un corps principal de bec cueilleur (25) ;
- une vis sans fin de bec cueilleur (40);
- des moyens érafleurs (60) prévus au niveau d'un emplacement situé à l'avant de la vis sans fin de bec cueilleur (40), lorsqu'on les considère dans le sens d'avancement fonctionnel du bec cueilleur (20), et aptes à agir pour, en service, détacher des produits de récolte désirés à partir de tiges de récolte sur pied ; et
- des moyens faucheurs (50) ;
ledit bec cueilleur (20) étant caractérisé en ce qu'il comprend également :
- des moyens à toile convoyeuse (35) prévus entre les moyens érafleurs (60) et les moyens faucheurs (50), d'une part, et la vis sans fin de bec cueilleur (40), d'autre part ; les moyens faucheurs (50) étant aptes à agir pour, en service, séparer du chaume des produits de récolte sur pied contenant des tiges de récolte présentant sur elles des produits de récolte désirés ;
- des moyens associés aux moyens faucheurs (50) pour rendre, à volonté, ces moyens faucheurs (50) actifs, respectivement inactifs, pour réaliser ladite fonction de séparation ; et
- des moyens associés aux moyens érafleurs (60) pour rendre, à volonté, ces moyens érafleurs (60) actifs, respectivement inactifs, pour réaliser ladite fonction d'éraflage ;
la conception étant telle que le bec cueilleur (20) est ajustable, à volonté, dans l'une ou l'autre des conditions de fonctionnement suivantes dans lesquelles :
a) les moyens faucheurs (50) sont rendus inactifs pour réaliser ladite fonction de séparation, tandis que les moyens érafleurs (60) sont rendus actifs pour réaliser ladite fonction d'éraflage et délivrer les produits de récolte désirés aux moyens à toile convoyeuse (35) afin qu'ils continuent à être transportés par ceux-ci jusqu'à la vis sans fin de bec cueilleur (40), ou
b) les moyens érafleurs (60) sont rendus inactifs pour réaliser ladite fonction d'éraflage, tandis que les moyens faucheurs (50) sont rendus actifs pour réaliser ladite fonction de séparation et permettre la fourniture des produits de récolte séparés aux moyens à toile convoyeuse (35) afin qu'ils continuent à être transportés par ceux-ci jusqu'à la vis sans fin de bec cueilleur (40).

2. Bec cueilleur (20) selon la revendication 1, caractérisé en ce que le corps principal (25) du bec cueilleur peut être fixé à une unité de base (2) d'une moissonneuse-batteuse d'une manière permettant un ajustement de la position du bec cueilleur (20) au-dessus du sol.

3. Bec cueilleur (20) selon la revendication 1 ou 2, caractérisé en ce que :
- le corps principal (25) du bec cueilleur a, dans l'ensemble, une configuration en auge et est orienté, d'une manière générale, transversalement, lorsqu'on le considère dans le sens de déplacement fonctionnel du bec cueilleur (20), et
- la vis sans fin (40) du bec cueilleur est prévue à l'intérieur de ladite configuration en auge ; ladite vis sans fin (40) comportant des spires de regroupement (41) espacées les unes des autres transversalement et orientées d'une manière opposée, et une section centrale pourvue d'éléments de chargement rétractables (42).

4. Bec cueilleur (20) selon l'une quelconque des revendications précédentes, caractérisé en ce que les moyens à toile convoyeuse (35) comprennent :
- un sous-châssis comprenant une paroi inférieure (36) et des parois latérales (37) opposées transversalement ; ledit sous-châssis pouvant être fixé au corps principal (25) du bec cueilleur, et
- une toile convoyeuse (45) montée sur le sous-châssis et inclinée vers le haut d'avant en arrière, lorsqu'on la considère dans le sens de déplacement fonctionnel du bec cueilleur (20).

5. Bec cueilleur (20) selon la revendication 4, lorsque celle-ci est dépendante de la revendication 3, caractérisé en ce que la toile convoyeuse (45) a son extrémité de déchargement arrière positionnée à proximité de l'extrémité avant de la vis sans fin (40) du bec cueilleur, à un niveau situé au-dessus de l'extrémité inférieure de celle-ci.

6. Bec cueilleur (20) selon la revendication 4 ou 5, caractérisé en ce que lesdits moyens associés aux moyens faucheurs (50) comprennent des moyens permettant de monter d'une manière amovible les moyens faucheurs (50) sur le sous-châssis (36, 37) de la toile convoyeuse, d'une manière générale, au niveau d'une extrémité transversale avant et inférieure de celui-ci.

7. Bec cueilleur (20) selon la revendication 4 ou 5, caractérisé en ce que :
- les moyens faucheurs (50) sont montés sur le sous-châssis (36, 37) de la toile convoyeuse, d'une manière générale, au niveau d'une extrémité transversale avant et inférieure de celui-ci, et
- lesdits moyens associés aux moyens faucheurs (50) comprennent des moyens de protection (51) aptes à être positionnés pour protéger les moyens faucheurs (50) à l'encontre d'un contact avec des tiges de récolte, pour ainsi rendre lesdits moyens faucheurs (50) inactifs.

8. Bec cueilleur (20) selon la revendication 7, caractérisé en ce que lesdits moyens associés aux moyens faucheurs (50) comprennent également des moyens d'entraînement destinés à entraîner les moyens faucheurs (50) ; lesdits moyens d'entraînement pouvant être désaccouplés pour interrompre la transmission en direction des moyens faucheurs (50), lorsque les moyens de protection (51) sont placés dans la position de protection.

9. Bec cueilleur (20) selon la revendication 4 ou 5, caractérisé en ce que lesdits moyens associés aux moyens faucheurs (50) comprennent des moyens permettant de monter les moyens faucheurs (50) sur le corps principal (25) du bec cueilleur de façon qu'ils puissent être ajustés entre :
- une première position (50A) située, d'une manière générale, au niveau de l'extrémité transversale avant et inférieure des moyens à toile convoyeuse (35) pour séparer des tiges de récolte, et
- au moins une seconde position (50B/50C) située en arrière de ladite première position (50A).

10. Bec cueilleur (20) selon la revendication 9, caractérisé en ce que lesdits moyens de montage comprennent une tringlerie en forme de parallélogramme (80) disposée, d'une manière générale, au niveau de chacun des côtés opposés transversalement du bec cueilleur (20) pour supporter d'une manière ajustable les extrémités opposées transversalement des moyens faucheurs (50) sur les parois latérales opposées transversalement (30) correspondantes du bec cueilleur.

11. Bec cueilleur (20) selon la revendication 10, caractérisé en ce que lesdits moyens de montage comprennent également des moyens de commande de position (81) montés d'une manière fonctionnelle entre chaque tringlerie en forme de parallélogramme (80) et la paroi latérale (30) correspondante du bec cueilleur.

12. Bec cueilleur (20) selon la revendication 10 ou 11, caractérisé en ce que lesdits moyens associés aux moyens faucheurs (50) comprennent également des moyens de fixation destinés à fixer les moyens faucheurs (50) à l'extrémité transversale avant et inférieure du sous-châssis (36, 37) de la toile convoyeuse, lorsque lesdits moyens faucheurs (50) sont ajustés dans ladite première position (50A).

13. Bec cueilleur (20) selon l'une quelconque des revendications 9 à 12, caractérisé en ce que ladite seconde position des moyens faucheurs (50) est une position rétractée inactive (50C) hors d'atteinte des tiges de récolte sur pied.

14. Bec cueilleur (20) selon la revendication 13, caractérisé en ce que :
- le corps principal (25) du bec cueilleur est, au niveau de son extrémité inférieure, pourvu de patins (31) aptes à venir en contact avec le sol, et
- les moyens faucheurs (50) sont, lorsqu'ils sont ajustés dans ladite position rétractée inactive (50C), disposés derrière lesdits patins (31) et au-dessus du niveau de la face inférieure de ceux-ci.

15. Bec cueilleur (20) selon la revendication 13 ou 14, caractérisé en ce que lesdits moyens associés aux moyens faucheurs (50) comprennent également des moyens de support prévus sur le corps principal (25) du bec cueilleur et auxquels les moyens faucheurs (50) peuvent être fixés, lorsqu'ils sont ajustés dans ladite position rétractée inactive (50C).

16. Bec cueilleur (20) selon l'une quelconque des revendications 9 à 15, caractérisé en ce que lesdits moyens associés aux moyens faucheurs (50) comprennent également des moyens d'ajustement destinés à ajuster les moyens faucheurs (50) dans une position (50B) située à une certaine distance au-dessous du niveau de la face inférieure du corps principal (25) du bec cueilleur et à une certaine distance derrière l'extrémité avant de la toile convoyeuse (45).

17. Bec cueilleur (20) selon la revendication 16, caractérisé en ce que, lorsqu'ils sont placés dans ladite position (50B) au-dessous du niveau de la face inférieure du corps principal (25) du bec cueilleur, lesdits moyens faucheurs (50) peuvent, en service, suivre d'une manière flottante les contours du sol.

18. Bec cueilleur (20) selon l'une quelconque des revendications 9 à 11, respectivement l'une quelconque des revendications 13 à 15, lorsque celles-ci sont dépendantes de l'une quelconque desdites revendications 9 à 11, caractérisé en ce que, lorsqu'ils sont placés dans ladite première position (50A), lesdits moyens faucheurs (50) peuvent, en service, suivre d'une manière flottante les contours du sol.

19. Bec cueilleur (20) selon la revendication 18, caractérisé en ce que des moyens d'arrêt sont prévus pour limiter le mouvement flottant des moyens faucheurs (50) à proximité de ladite extrémité transversale avant et inférieure des moyens à toile convoyeuse (45).

20. Bec cueilleur (20) selon l'une quelconque des revendications 17 à 19, lorsque celles-ci sont directement ou indirectement dépendantes de la revendication 11, caractérisé en ce que les moyens d'ajustement (80, 81) comprennent des moyens de liaison pouvant être désaccouplés entre les moyens de commande de position (81) et les tringleries en forme de parallélogramme (80) ; lesdits moyens de liaison reliant les moyens de commande de position (81) aux tringleries en forme de parallélogramme (80) lorsqu'ils sont accouplés, et désolidarisant les moyens de commande de position (81) vis-à-vis des tringleries en forme de parallélogramme (80) lorsqu'ils sont désaccouplés, pour ainsi permettre ledit mouvement de flottement des moyens faucheurs (50).

21. Bec cueilleur (20) selon l'une quelconque des revendications 17 à 20, caractérisé en ce que les moyens faucheurs (50) sont équipés d'organes aptes à venir en contact avec le sol, qui se présentent sous la forme de patins ou de roulettes d'écartement, destinés à supporter lesdits moyens faucheurs (50) sur le sol pendant leur mouvement de flottement le long de la surface du sol.

22. Bec cueilleur (20) selon l'une quelconque des revendications 13 à 15 ou l'une quelconque des revendications 16 à 21, lorsque celles-ci sont dépendantes de l'une quelconque desdites revendications 13 à 15, caractérisé en ce que lesdits moyens associés aux moyens faucheurs (50) comprennent également - des moyens d'entraînement hydrostatiques destinés à entraîner les moyens faucheurs (50) lorsque ceux-ci sont placés dans n'importe quelle position (50A, 50B) autre que la position rétractée inactive (50C).

23. Bec cueilleur (20) selon la revendication 17 ou l'une quelconque des revendications 20 à 22, lorsque celles-ci sont dépendantes de la revendication 17, caractérisé en ce qu'il est prévu des moyens d'ajustement de hauteur de bec cueilleur automatiques qui, en service, sont aptes à agir pour positionner le bec cueilleur (20) afin que les moyens érafleurs (60) viennent en contact avec les produits de récolte sur pied, au niveau de la hauteur des épis de ceux-ci, pour en détacher les épis, tout en permettant aux moyens faucheurs (50) de suivre les contours du sol au niveau de ladite position située au-dessous de la face inférieure du corps principal (25) du bec cueilleur et à l'arrière de l'extrémité avant de la toile convoyeuse (45), pour couper les tiges de récolte sur pied une fois que les épis en ont été détachés.

24. Bec cueilleur (20) selon l'une quelconque des revendications 4 à 23, caractérisé en ce que :
- les moyens érafleurs (60) comprennent un rotor érafleur (66), et
- les moyens associés aux moyens érafleurs (60) comprennent des moyens d'ajustement destinés à ajuster les moyens érafleurs (60) entre une position d'éraflage abaissée dans laquelle ledit rotor (66) est disposé en ayant son extrémité inférieure située, d'une manière générale, au niveau de l'extrémité avant de la toile convoyeuse (45) et une position relevée située à une certaine distance au-dessus dudit niveau.

25. Bec cueilleur (20) selon la revendication 24, caractérisé en ce que les moyens d'ajustement comprennent :
- des bras de montage (61/77) espacés les uns des autres transversalement et s'étendant, d'une manière générale, longitudinalement qui, au niveau de l'une de leurs extrémités, sont montés d'une manière pivotante sur le corps principal (25) du bec cueilleur et qui, d'une manière générale au niveau ou à proximité de leur autre extrémité, portent les moyens érafleurs (60), et
- des moyens de commande de position (63) qui s'étendent d'une manière fonctionnelle entre lesdits bras (61/77) et les parois latérales (30) correspondantes du bec cueilleur pour ajuster le réglage en hauteur des moyens érafleurs (60) par rapport à la toile convoyeuse (45).

26. Bec cueilleur (20) selon la revendication 24 ou 25, caractérisé en ce que les moyens érafleurs (60) comprennent également des parois latérales (65) disposées au niveau des côtés opposés transversalement du rotor érafleur (66) et qui s'accouplent avec les parois latérales (37) correspondantes des moyens à toile convoyeuse (35), lorsqu'ils sont placés dans ladite position d'éraflage abaissée.

27. Bec cueilleur (20) selon l'une quelconque des revendications 24 à 26, caractérisé en ce que lesdits moyens associés aux moyens érafleurs (60) comprennent des moyens d'entraînement réversibles à vitesse variable destinés à entraîner le rotor érafleur (66).

28. Bec cueilleur (20) selon la revendication 27, caractérisé en ce que lesdits moyens associés aux moyens érafleurs (60) comprennent également des moyens d'entraînement destinés à entraîner les moyens érafleurs (60) ; la conception étant telle que :
- dans la position abaissée de moissonnage par éraflage des moyens érafleurs (60), le rotor érafleur (66) est entraîné en rotation à une première vitesse dans un premier sens (69) afin de détacher des produits de récolte désirés des tiges de récolte sur pied et de délivrer ces produits par le dessus aux moyens à toile convoyeuse (35), et
- lorsque les moyens érafleurs (60) sont dans la position relevée, le rotor érafleur (66) est entraîné en rotation dans le sens opposé (70) et à une vitesse inférieure à ladite première vitesse ; la conception permettant d'acheminer des produits de récolte contenant des tiges de récolte qui présentent sur elles des produits de récolte désirés vers l'arrière, par en-dessous.

29. Bec cueilleur (20) selon la revendication 28, caractérisé en ce que les moyens d'entraînement destinés aux moyens érafleurs (60) sont du type hydrostatique et aptes à agir pour faire tourner le rotor érafleur (66) dans le premier sens (69) à une vitesse qui se situe dans la plage de 600 à 750 tr/min et dans le sens opposé (70) à une vitesse qui se situe dans la plage de 15 à 100 tr/min.

30. Bec cueilleur (20) selon l'une quelconque des revendications 24 à 29, caractérisé en ce que les moyens érafleurs (60) comprennent également au moins deux écrans de recouvrement d'érafleur repliables (67, 68) qui peuvent être ajustés entre, d'une part, une position active étendue qui s'étend fondamentalement autour de la partie avant et supérieure du rotor érafleur (66) pour coopérer avec celui-ci dans le mode de moissonnage par éraflage et, d'autre part, une position rétractée située fondamentalement au-dessus et à l'avant du rotor érafleur (66) afin de limiter l'obstruction de la visibilité de l'opérateur sur le fonctionnement du bec cueilleur (20), lorsque ce dernier est réglé pour avoir le rotor érafleur (66) dans ladite position relevée.

31. Bec cueilleur (20) selon l'une quelconque des revendications 24 à 29, caractérisé en ce que les moyens érafleurs (60) comprennent également des moyens de protection amovibles (67, 68) qui, lorsqu'ils sont installés, s'étendent fondamentalement autour des parties avant et supérieure du rotor érafleur (66) pour coopérer avec celui-ci dans le mode de moissonnage par éraflage, et qui peuvent être démontés afin d'éviter de gêner la visibilité de l'opérateur sur le fonctionnement du bec cueilleur (20), lorsque celui-ci est réglé pour avoir le rotor érafleur (66) dans ladite position relevée.

32. Bec cueilleur (20) selon l'une quelconque des revendications 24 à 26, caractérisé en ce que :
- lesdits moyens associés aux moyens érafleurs comprennent des moyens d'entraînement qui, dans le mode de moissonnage par éraflage du bec cueilleur (20), dans lequel le rotor érafleur (66) est placé dans ladite position d'éraflage abaissée, sont aptes à agir pour faire tourner ledit rotor érafleur (66) afin de détacher des produits de récolte désirés de tiges de récolte sur pied et de délivrer ces produits par le dessus aux moyens à toile convoyeuse (35),
- ladite position relevée du rotor érafleur (66) est une position totalement rétractée et inactive dans laquelle le rotor érafleur (66), lorsque le bec cueilleur (20) est en service, ne vient pas en contact avec des récoltes sur pied dans le champ, et
- lesdits moyens d'entraînement peuvent être désaccouplés pour permettre une interruption de la transmission en direction du rotor érafleur (66), lorsque celui-ci est placé dans ladite position relevée.

33. Bec cueilleur (20) selon l'une quelconque des revendications 4 à 23, caractérisé en ce que lesdits moyens associés aux moyens érafleurs (60) comprennent des moyens de montage permettant un montage amovible des moyens érafleurs (60) sur le corps principal (25) du bec cueilleur de manière à permettre, à volonté :
- l'installation desdits moyens érafleurs (60) sur le corps principal (25) du bec cueilleur pour ainsi permettre aux moyens érafleurs (66) et aux moyens à toile convoyeuse (35) de coopérer pour moissonner par éraflage des produits de récolte désirés à partir de récoltes sur pied dans le champ, et
- le démontage desdits moyens érafleurs (66) du corps principal (25) du bec cueilleur pour ainsi permettre aux moyens faucheurs (50) et aux moyens à toile convoyeuse (35) de coopérer pour moissonner des récoltes sur pied dans le champ sans l'intervention des moyens érafleurs (60).

34. Bec cueilleur (20) selon l'une quelconque des revendications 4 à 23, caractérisé en ce que lesdits moyens associés aux moyens érafleurs (60) comprennent des moyens de montage permettant de monter d'une manière amovible les moyens érafleurs (60) ou une structure formant rabatteur (75) comportant des dents de rabatteur à position contrôlée (76), sur le corps principal (25) du bec cueilleur ; la conception étant telle qu'il est possible, à volonté :
- d'installer les moyens érafleurs (60) sur le corps principal (25) du bec cueilleur pour ainsi permettre à ces moyens érafleurs (60) et aux moyens à toile convoyeuse (35) de coopérer pour moissonner par éraflage des produits de récolte désirés à partir de récoltes sur pied dans le champ,
- ou d'installer la structure formant rabatteur (75) sur le corps principal (25) du bec cueilleur en remplacement, par conséquent, des moyens érafleurs (60) pour ainsi permettre à cette structure formant rabatteur (75) de coopérer avec les moyens faucheurs (50) et les moyens à toile convoyeuse (35) pour moissonner des récoltes sur pied dans le champ sans l'intervention des moyens érafleurs (60).l
